# EUROPÄISCHE PATENTSCHRIFT

(11) **EP 2 060 379 B1**
(45) Veröffentlichungstag und Bekanntmachung des Hinweises auf die Patenterteilung: **19.10.2011**
(21) Anmeldenummer: 07022278.1
(22) Anmeldetag: 16.11.2007
(51) Int. Cl.: B29C 45/00, B29C 45/16, B60H 1/00, F04D 29/02, F04D 29/64, F04D 29/66, F16F 15/08, H02K 5/24

(54) **Schwingungsentkoppelnder Halter**
Vibration isolating support
Support offrant une isolation vibratoire

(43) Veröffentlichungstag der Anmeldung: 20.05.2009
(73) Patentinhaber: Behr France Rouffach SAS, 68250 Rouffach (FR)
(72) Erfinder: Boesch, Christian, 68570 Soultzmatt (FR); Grob, Frederic, 68920 Wettolsheim (FR)
(74) Vertreter: Grauel, Andreas

(56) Entgegenhaltungen:
- EP-A- 0 642 206
- EP-A- 1 498 613
- DE-U1- 9 303 162
- FR-A- 1 255 721
- US-A- 4 385 025
- US-A- 4 568 243
- US-A1- 2006 038 106

## Beschreibung

Die Erfindung betrifft einen entkoppelnden Halter, insbesondere für die Lagerung und Halterung eines Gebläsemotors bei einem Kraftfahrzeug, gemäß dem Oberbegriff des Anspruchs 1.

Aus der EP 1 447 592 A2 ist eine Verbindung zwischen einem tragenden Element, insbesondere einer Motorhalterung, und einem getragenen Element, insbesondere einem Kraftfahrzeug-Gebläse, vorzugsweise dem Lüfterrad mit Motor, vorgesehen, wobei zwischen dem tragenden Element und dem getragenen Element ein elastisches Hohlprofil angeordnet und ein Vorsprung vorgesehen ist, der im Falle einer Belastung eine Verformung des elastischen Hohlprofils bewirkt. Der Vorsprung ist in Richtung der Relativbewegung des getragenen Elements zum tragenden Element ausgerichtet.

Die DE 197 46 185 A1 offenbart einen Halter für einen Elektromotor, insbesondere für einen Gebläsemotor einer Lüftungs-, Heizungs- oder Klimaanlage eines Kraftfahrzeugs, mit elastisch nachgiebigen Abstützelementen zur Schwingungsentkopplung zwischen Motor und Halter, wobei der Motor unmittelbar an den Abstützelementen abgestützt ist. Hierbei sind die Abstützelemente einstückig mit dem Halter ausgebildet, wobei der Halter mit den welchelastischen Abstützelementen im Zwei-Komponenten-Spritzgussverfahren herstellbar ist.

Es ist Aufgabe der Erfindung, einen verbesserten Halter zur Verfügung zu stellen.

Diese Aufgabe wird gelöst durch einen entkoppelnd wirkenden Halter mit den Merkmalen des Anspruchs 1. Vorteilhafte Ausgestaltungen sind Gegenstand der Unteransprüche.

Erfindungsgemäß ist ein entkoppelnd wirkender Halter vorgesehen, welcher zum Halten für mindestens ein zu haltendes Bauteil dient, insbesondere bevorzugt für einen Gebläsemotor, vorgesehen, mit einem formstabilen, ersten Bereich, bestehend aus einem formstabilen ersten Material, und einem elastischen, zweiten Bereich, bestehend aus einem elastischen, dämpfend wirkenden zweiten Material, welcher einstückig in Bezug auf den formstabilen, ersten Bereich ausgebildet ist, wobei ein formstabiler, dritter Bereich, bestehend aus einem formstabilen dritten Material vorgesehen ist, der einstückig in Bezug auf den elastischen, zweiten Bereich ausgebildet ist und durch den zweiten Bereich von dem ersten Bereich räumlich getrennt ist, der formstabile, erste Bereich durch einen Träger gebildet ist oder zur Anbringung an einem Träger ausgebildet ist, und der formstabile, dritte Bereich für die Aufnahme des zu haltenden Bauteils ausgebildet ist. Unter einstückig in Bezug auf einen anderen Bereich ausgebildet wird hierbei verstanden, dass zwischen den beiden benachbarten Bereichen eine feste Verbindung besteht. Diese Verbindung kann im Rahmen eines gemeinsamen Herstellungsverfahrens (Zweikomponenten-Spritzgussverfahren) oder einer im Rahmen der Montage erfolgenden Verbindung, wie beispielsweise mittels Klebens, erfolgen.

Als Materialien für den elastischen, zweiten Bereich kommen insbesondere Gummi, Silikon, SEBS oder EPDM in Frage.

Bevorzugt sind der erste Bereich und der dritte Bereich aus dem gleichen Material geformt, was insbesondere in Bezug auf die Herstellung, aber auch in Bezug auf ein mögliches Recycling Vorteile mit sich bringt. Als Materialien kommen beispielsweise PP oder PA in Frage. Die Materialien können, gegebenenfalls auch nur bereichsweise, verstärkt ausgebildet sein, beispielsweise mit Hilfe von Glasfasern o.ä..

Der erste Bereich ist vorzugsweise zumindest in einem Teilbereich hohlzylindrisch ausgebildet. Hierbei ist der formstabile erste Bereich bevorzugt außerhalb des zweiten Bereichs angeordnet. Insbesondere bevorzugt sind auch der zweite und der dritte Bereich in entsprechenden Teilbereichen hohlzylindrisch ausgebildet, wobei diese Teilbereiche besonders bevorzugt koaxial zueinander angeordnet sind. Besonders bevorzugt fallen diese Mittellängsachse und die Mittellängsachse des zu haltenden Bauteils, insbesondere bevorzugt gebildet durch eine Drehachse, zusammen.

Bevorzugt ist der zweite Bereich zumindest in einem Teilbereich hohlzylindrisch oder ringförmig ausgebildet. Dabei kann auch eine Mehrzahl von zweiten Bereichen zwischen dem formstabilen ersten Bereich und dem zweiten Bereich angeordnet sein, wobei diese zweiten Bereiche zumindest teilweise in Gestalt eines Hohlzylinders angeordnet sind.

Erfindungsgemäß ist auch der dritte Bereich, der bevorzugt innen angeordnet ist, zumindest in einem Teilbereich hohlzylindrisch ausgebildet. Hierbei bildet er vorzugsweise eine an einem Ende ganz oder teilweise verschlossene Aufnahme für das zu haltende Bauteil, mit welchem dieser dritte Bereich zur Verhinderung von Relativbewegungen und damit verbundenen Geräuschen möglichst spielfrei fest verbunden wird.

Der zweite Bereich ist vorzugsweise durch eine Mehrzahl von Hohlprofilen und/oder Vollprofilen gebildet. Durch das Vorsehen von einzelnen Profilen lässt sich mit einem Standardteil eine flexibel anpassbare Ausgestaltung des elastischen, zweiten Bereichs bewerkstelligen, auch für unterschiedliche Modelle und Belastungsbereiche. Erfindungsgemäß ist der zweite Bereich durch eine Mehrzahl von parallel verlaufend angeordneten Hohlprofile und/oder Vollprofilen gebildet. Diese Profile sind besonders bevorzugt äquidistant, insbesondere gleichmäßig verteilt über den Umfang eines Zylinders angeordnet.

Die Gestalt der Hohlprofile und/oder Vollprofile ist nicht beschränkt. Besonders bevorzugt sind jedoch rechteckförmige Profile, gegebenenfalls mit versteifenden Stegen. Zur Veränderung der Steifigkeit können Hohlprofile auch auf einer Seite oder in einem anderen Bereich durch einen Quersteg verschlossen sein. Dies erhöht den Widerstand gegen Verformung im entsprechenden Bereich gegenüber dem benachbarten Bereich der Profile.

Ein derartiger Halter wird besonders bevorzugt für die Entkoppelung einer Lagerung zwischen einem Kraftfahrzeug-Gebläsemotor und dessen Träger verwendet. Hierbei ist bevorzugt der formstabile erste Bereich fest mit dem Träger verbunden oder wird gegebenenfalls direkt durch den Träger gebildet. Der formstabile dritte Bereich ist dagegen fest mit dem Gebläsemotor verbunden, wobei derselbe besonders bevorzugt in einer entsprechend den Außenabmessungen des Motorgehäuses und den Anordnungen der Anschlussleitungen ausgebildeten Aufnahme des dritten Bereichs angeordnet ist. Die Verbindung zwischen dem dritten Bereich und dem Gebläsemotor kann auf beliebige Weise erfolgen, besonders bevorzugt sind jedoch Clipsverbindungen und/oder Schraubverbindungen. Beispielsweise kann auch ein Einpressen ausreichend sein.

Im Folgenden wird die Erfindung anhand mehrerer Ausführungsbeispiele mit Varianten unter Bezugnahme auf die Zeichnung im Einzelnen erläutert wobei die Erfindung lediglich die Ausführungsbeispiele 2 und 3 betrifft. Es zeigen:
- Fig. 1: einen Schnitt durch ein erstes Ausführungsbeispiel,
- Fig. 2: eine Draufsicht auf ein zweites Ausführungsbeispiel, wobei in der Zeichnung zusätzlich zum Ausführungsbeispiel zwei Querschnitte von Varianten für die elastischen, zweiten Bereiche dargestellt sind,
- Fig. 3: einen Schnitt durch das zweites Ausführungsbeispiel,
- Fig. 4: eine ausschnittsweise Darstellung eines Schnitts durch eine dritte Variante des zweiten Ausführungsbeispiels,
- Fig. 5: eine ausschnittsweise Darstellung eines Schnitts durch eine vierte Variante des zweiten Ausführungsbeispiels,
- Fig. 6: eine ausschnittsweise Darstellung eines Schnitts durch eine fünfte Variante des zweiten Ausführungsbeispiels,
- Fig. 7: eine Draufsicht auf ein drittes Ausführungsbeispiel, wobei neben dem Querschnitt des elastischen, zweiten Bereichs gemäß dem dritten Ausführungsbeispiel eine weitere Querschnittsvariante für den zweiten Bereich dargestellt ist,
- Fig. 8: eine Ansicht von hinten auf ein viertes Ausführungsbeispiel,
- Fig. 9: eine perspektivische, seitliche Ansicht des Ausführungsbeispiels von Fig. 8,
- Fig. 10: eine perspektivische Ansicht von schräg vorn auf das Ausführungsbeispiel von Fig. 8,
- Fig. 11: einen Schnitt entlang der Längsachse durch das Ausführungsbeispiel von Fig. 8,
- Fig. 12: einen Schnitt, der im rechten Winkel zum Schnitt von Fig. 11 liegt, entlang der Längsachse durch das vierte Ausführungsbeispiel, und
- Fig. 13: einen Schnitt, der in einem 60°-Winkel zum Schnitt von Fig. 11 liegt, entlang der Längsachse durch das vierte Ausführungsbeispiel.

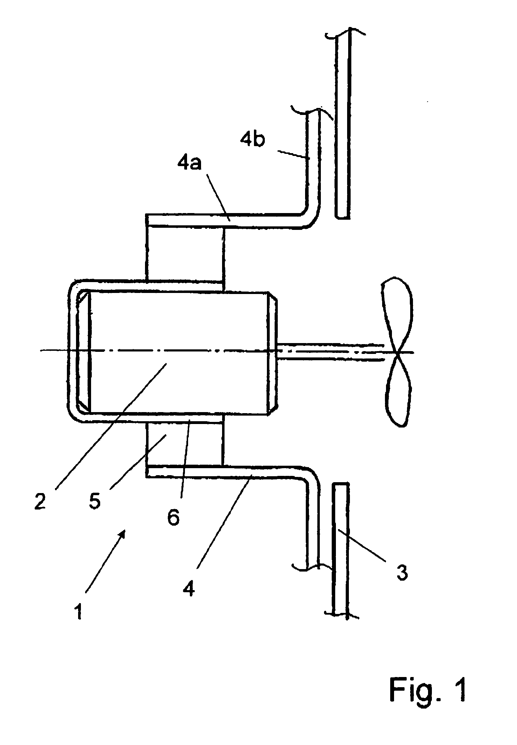

Fig. 1 zeigt einen Halter 1, welcher der entkoppelten Anbringung eines Gebläsemotors 2 samt Welle und Lüfterrad an einem Träger 3, vorliegend direkt durch einen Teil eines Trägers gebildet, dient. Der Halter 1 ist zur Anbringung desselben an dem Träger 3 mit einem ersten, aus einem formstabilen Kunststoff gebildeten Bereich 4 ausgebildet, welcher einen im Wesentlichen hohlzylindrischen Bereich 4a, der konzentrisch zur Motordrehachse angeordnet ist, und einem sich in radialer Richtung erstreckenden Bereich 4b ausgebildet, welche eine Kontakt- und Befestigungsfläche für die Anbringung am Träger 3 bildet, an welchem der Halter 1 mittels Schrauben (nicht dargestellt) fixiert ist.

Innerhalb des beabstandet vom sich in radialer Richtung erstreckenden Bereichs 4b angeordneten, hohlzylindrischen Bereichs 4a ist kreisringförmig ein hohlzylindrischer zweiter Bereich 5 aus einem elastischen Material angeordnet, welcher einstückig mit dem Bereich 4 ausgebildet ist.

Im Inneren des elastischen, zweiten Bereichs 5 ist ein dritter, aus einem formstabilen Kunststoff - vorliegend dem selben Kunststoff wie der erste Bereich 4 - gebildeter Bereich 6 angeordnet, welcher die Gestalt eines an einem Ende verschlossenen Hohlzylinders aufweist. Die Innenabmessungen des Hohlzylinders sind auf diejenigen des in den Hohlzylinder eingesetzten Gebläsemotors 2 abgestimmt, so dass dieser sicher hierin fixiert ist und keine Relativbewegungen zwischen dem Halter 1 und dem Gebläsemotor 2 bei normalem Betrieb des Gebläses auftreten. Der Gebläsemotor 2 ist hierbei derart im Halter 1 positioniert, dass der Schwerpunkt desselben in einer Ebene liegt, welche vorliegend senkrecht zur Zylinderachse und im Wesentlichen mittig durch den elastischen, zweiten Bereich 2 verläuft.

Die beiden aus einem formstabilen Kunststoff bestehenden Bereiche 4 und 6 sind gemäß dem ersten Ausführungsbeispiel aus Polypropylen geformt. Der dazwischen angeordnete elastische Bereich 5 besteht vorliegend aus EPDM. Die drei Bereiche 4, 5 und 6 sind mittels eines Zweikomponenten-Spritzgussverfahrens spritzgegossen und daher fest miteinander verbunden. Im Rahmen des Spritzgießens können auch weitere, versteifende Elemente oder der Anbindung dienende Elemente, beispielsweise aus Metall, in die formstabilen Bereiche 4 und/oder 6 eingegossen werden. Der aus einem elastischen Material gebildete zweite Bereich 5 sorgt neben einer Entkopplung zwischen dem ersten Bereich 4 und dem dritten Bereich 6 auch für eine luftdichte Verbindung dieser beiden Bereiche 4 und 6. Luft, die vom Gebläse gefördert wird, kann so nicht in den Außenbereich des Halters 1.

Im Folgenden wird das zweite Ausführungsbeispiel näher beschrieben, welches soweit im Folgenden nicht ausdrücklich erwähnt, dem ersten Ausführungsbeispiel entspricht. Hierbei sind gleiche oder gleichwirkende Bauteile bzw. Bereiche mit um 10 höheren Bezugszeichen versehen als beim zuvor beschriebenen ersten Ausführungsbeispiel.

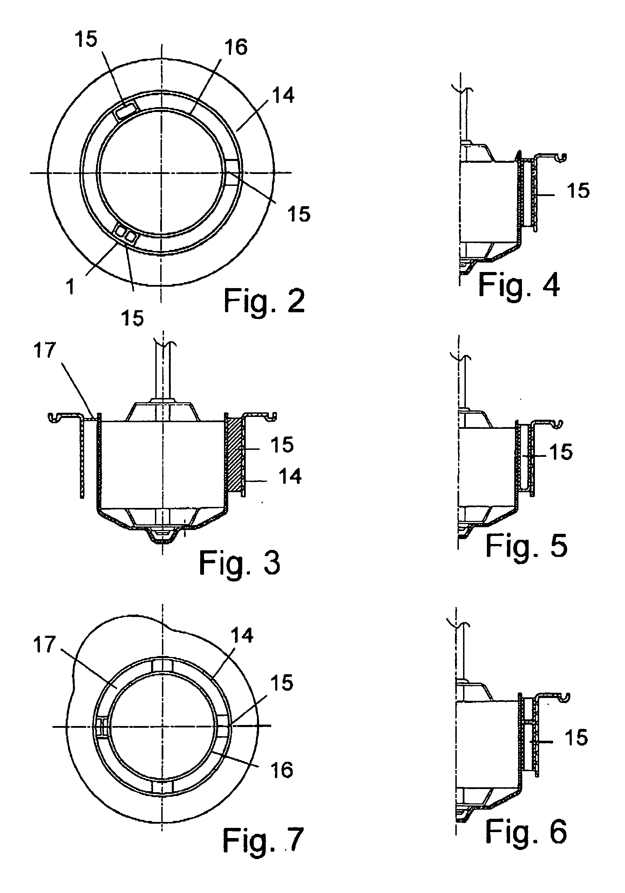

Gemäß dem zweiten Ausführungsbeispiel sind beim Halter 11 - im Unterschied zum ersten Ausführungsbeispiel - an Stelle eines einzigen hohlzylindrischen, elastischen zweiten Bereichs 5, der zwischen zwei formstabilen Bereichen 4 und 6 angeordnet ist, drei gleichmäßig über den Umfang des inneren formstabilen dritten Bereichs 16 verteilte, sich parallel zur Längsachse des dritten Bereichs 16 erstreckende elastische, zweite Bereiche 15 vor gesehen, welche außen am ersten formstabilen Bereich 14 enden. Wie aus Fig. 2 rechts in Verbindung mit Fig. 3 ersichtlich, ist der zweite Bereich 15 jeweils durch ein Vollprofil eines elastischen Materials gebildet, welches einstückig mit den Bereichen 14 und 16 verbunden ist. Die Herstellung erfolgt vorliegend mittels nachträglichen Anspritzens an die entsprechend positionierten ersten und dritten Bereiche 14 und 16.

Gemäß einer ersten Variante des zweiten Ausführungsbeispiels wird der zweite Bereich 15 durch drei rechteckförmige Hohlprofile gebildet (siehe Fig. 2. links oben). Die Hohlprofile bestehen vorliegend aus Gummi und sind zwischen die formstabilen Bereiche 14 und 16 unter leichtem Zusammenpressen derselben fest eingeklebt. Der Gebläsemotor 12 ist im formstabilen dritten Bereich 16 mittels Schrauben befestigt, wobei in Fig. 3 unten nur eine Schraube angedeutet ist.

Die zweite Variante des zweiten Ausführungsbeispiels entspricht im Wesentlichen der ersten Variante, jedoch ist ein parallel zur Längserstreckung des zweiten Bereichs 15 in radialer Richtung bezüglich des dritten Bereichs 16 verlaufender Steg im Rechteckhohlprofil ausgebildet, welcher den Widerstand gegen eine Relativbewegung des formstabilen ersten Bereichs 14 gegenüber dem formstabilen zweiten Bereich 16 erhöht.

Fig. 4 zeigt eine dritte Variante eines Querschnitts des zweiten Bereichs 15, wobei die einzelnen Rechteckprofile an einem Ende geschlossen ausgebildet sind. Dies ergibt unterschiedliche Kräfte gegen Relativbewegungen im Bezug auf das offene Ende des Rechteckprofils und das geschlossene Ende des Rechteckprofils. Ferner ist der Gebläsemotor 12 im formstabilen, dritten Bereich 16 mittels Clipsverbindungen befestigt, wofür am dem geschlossenen Ende des dritten Bereichs 16 gegenüberliegenden Ende Federarme ausgebildet sind, welche mit ihren nasenförmigen Enden das Ende des Gebläsemotors 12 umgreifen und so den Gebläsemotor 12 festhalten.

Fig. 5 zeigt eine vierte Variante eines Querschnitts des zweiten Bereichs 15, wobei die einzelnen Rechteckprofile im Vergleich zur vorigen Variante am anderen Ende geschlossen ausgebildet sind.

In Fig. 6 ist eine fünfte Variante eines Querschnitts des zweiten Bereichs 15 dargestellt, wobei das offene Profil des Rechteckquerschnitts nicht an den Enden des Profils sondern weiter innen durch einen Quersteg unterbrochen ist.

In Fig. 7 ist ein erfindungsgemäßes Ausführungsbeispiel dargestellt, bei dem die gleichen Bezugszeichen wie beim zweiten Ausführungsbeispiel und dessen Varianten verwendet wurden, gemäß dem vier gleichmäßig über den Umfang des inneren formstabilen dritten Bereichs 16 verteilte, sich parallel zur Längsachse des dritten Bereichs 16 erstreckende elastische, zweite Bereiche 15 vorgesehen sind, welche außen am ersten formstabilen Bereich 14 enden. Der zweite Bereich 15 ist jeweils durch ein Vollprofil eines elastischen Materials gebildet, welches einstückig mit den Bereichen 14 und 16 verbunden ist. Die Herstellung erfolgt vorliegend dadurch, dass die Vollprofile unter leichtem Zusammenpressen jeweils an den Innen- und Außenflächen an dem ersten und dritten Bereich 14 bzw. 16 angeklebt werden.

In Fig. 7, links dargestellt ist eine sechste Profilvariante für den elastischen, zweiten Bereich 15, wobei das Profil H-förmig ausgebildet ist und die Schenkel zwischen den ersten und dritten Bereichen verlaufen und mit ihren Enden hiermit jeweils verbunden sind, der Steg jedoch beabstandet von und etwa mittig zwischen den ersten und dritten Bereichen 14 bzw. 16 verläuft. Wie zudem aus Fig. 7 ersichtlich ist, muss der äußere, formstabile erste Bereich 14 nicht notwendigerweise vollständig hohlzylindrisch ausgebildet sein, sondem kann über seinen Umfang hinweg Abweichungen von der Zylinderform aufweisen.

Die Zahl der Profile, die über den Umfang verteilt angeordnet sind, ist nicht auf drei oder vier beschränkt. Ferner müssen die Profile nicht notwendigerweise gleichmäßig verteilt angeordnet sein, d.h. es können beispielsweise bei horizontalem Verlauf der Mittelachse des Motors unten und oben mehr Profile als auf den Seiten vorgesehen sein. Alternativ können auch unterschiedliche Profile verwendet werden.

Die Gestalt des Halters muss ferner nicht notwendigerweise zylinderförmig sein. Sie kann ebenso auf beliebige andere Außenabmessungen von zu haltenden Elementen angepasst sein. So kann sie beispielsweise auf rechteckförmigen Ausgestaltungen der formstabilen Bereiche sowie entsprechenden Ausgestaltungen des dazwischen angeordneten elastischen Bereichs - ggf. gebildet durch einzelne Profile, die entsprechend angeordnet sind - aufbauen. Ovale, elliptische, sechseckförmige, achteckförmige Ausgestaltungen oder beliebige andere Gestalten sind möglich.

In den Bereichen zwischen den am Umfang angeordneten zweiten Bereichen 15 ist zur vollständigen Abdichtung zwischen dem ersten Bereich 14 und dem dritten Bereich 16 eine dünne Schicht 17, die erfindungsgemäß einstückig und aus demselben Material wie der zweite Bereich 15 hergestellt ist, vorgesehen.

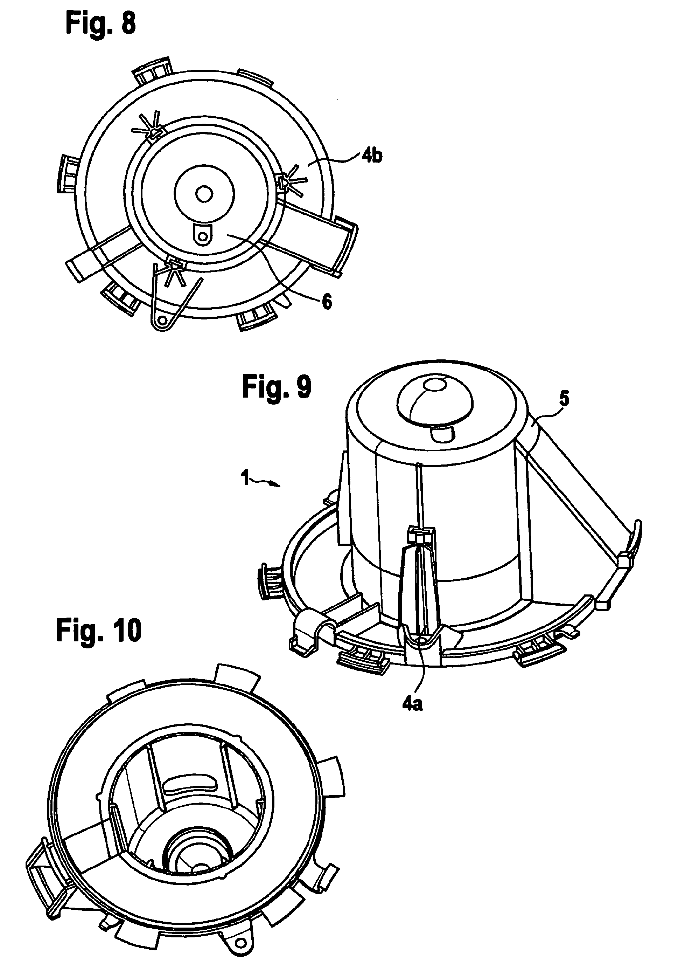

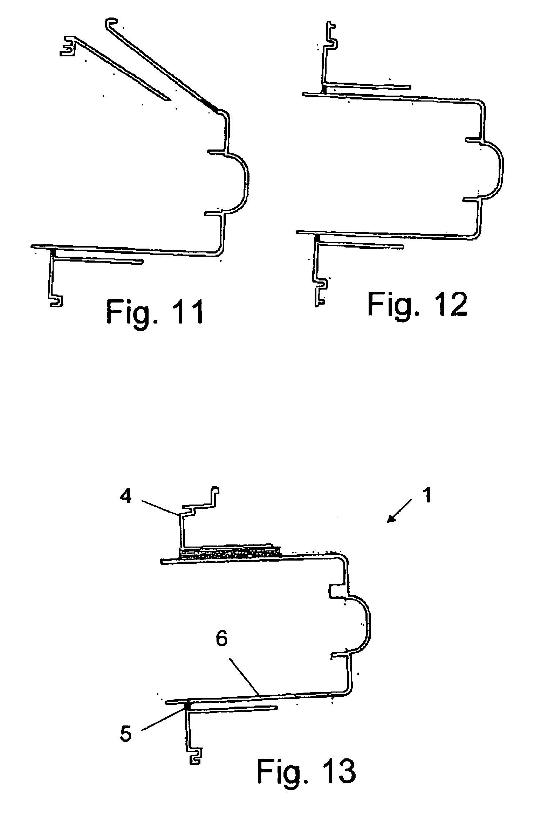

In den Figuren 8 bis 13 ist ein viertes Ausführungsbeispiel eines Halters 1 dargestellt, auf Grund der dem ersten Ausführungsbeispiel ähnelnden Gestalt gleiche oder gleichwirkende Bauteile bzw. Bereiche mit den gleichen Bezugszeichen versehen sind, wie beim zuvor ersten Ausführungsbeispiel.

Figuren 8 bis 13 zeigen einen Halter 1, welcher der entkoppelten Anbringung eines Gebläsemotors (nicht dargestellt) samt Welle und Lüfterrad an einem Träger (nicht dargestellt) dient. Der Halter 1 ist zur Anbringung desselben samt des hierin angeordneten Gebläsemotors an dem Träger mit einem ersten, aus einem formstabilen Kunststoff gebildeten Bereich 4 ausgebildet. Dieser Bereich 4 weist einen ersten Bereich 4a und einen zweiten Bereich 4b auf, wobei der erste, sich abschnittsweise in axialer Richtung erstreckende Bereich 4a gebildet ist, die über den zweiten, sich im Wesentlichen in radialer Richtung nach außen erstreckenden Bereich 4b miteinander verbunden sind. Dieser sich abschnittsweise in axialer Richtung erstreckende Bereich 4a weist Innenflächen auf, die insgesamt gesehen konzentrisch zur Motordrehachse angeordnet sind. Der besagte, sich in radialer Richtung erstreckende Bereich 4b bildet eine Kontakt- und Befestigungsfläche für die Anbringung am Träger, an welchem der Halter 1 mittels Schrauben (nicht dargestellt) fixiert ist. Für die Versorgung und die Anschlüsse des Gebläsemotors sind im ersten Bereich 4a entsprechende Kanäle und/oder Öffnungen ausgebildet.

Der sich abschnittsweise in axialer Richtung erstreckende Bereich 4a ist durch Versteifungen gebildet, die vorliegend in 60°-Winkeln über den (theoretischen) Umfang verteilt angeordnet sind, wobei an der Innenfläche dieser Versteifungen, parallel zur Längsachse, welche der Drehachse des Gebläsemotors entspricht, jeweils eine Nut im Bereich 4a ausgebildet ist.

Einstückig mit dem Bereich 4 über dessen Innenfläche verbunden ist - entsprechend dem ersten Ausführungsbeispiel - ein zweiter Bereich 5 aus einem elastischen Material ausgebildet, welcher eine konstante Dicke hat, abgesehen von den rippenartigen Bereichen, welche in den Nuten des Bereichs 4 angeordnet sind.

Hohlzylindrisch, mit einem geschlossenen und einem offenen Ende und einem seitlichen Schlitz und Öffnungen für Anschlüsse des Gebläsemotors ist innerhalb des zweiten Bereichs 5 ein dritter Bereich 6 angeordnet, welcher der direkten Aufnahme des Gebläsemotors dient, wobei der Gebläsemotor fest am dritten Bereich 6 fixiert wird, vorliegend mittels einer Schraube, welche durch eine Öffnung in der geschlossenen Endseite des dritten Bereichs gesteckt und in das Motorgehäuse geschraubt wird. Wie im ersten Ausführungsbeispiel sorgt der elastische Bereich 5 für eine Entkopplung und eine luftdichte Abdichtung zwischen dem ersten Bereich 4 und dem dritten Bereich 6.

Alternativ ist auch eine Fixierung des Motors mit Hilfe von Clipsverbindungen möglich, die an am offenen Ende des dritten Bereichs vorgesehene Federarme mit Vorsprüngen gebildet ist, welche entsprechend ausgebildete Bereiche des Gebläsemotors hintergreifen und so denselben festhalten.

Zur Erhöhung der Festigkeit des äußeren, ersten Bereichs 4 können insbesondere in den sich in axialer Richtung erstreckenden Bereichen und/oder in den Bereichen, in denen eine Anbindung an den Träger erfolgt, verstärkende Elemente eingespritzt sein, wie beispielsweise Metallplatten. Ebenso können als verstärkende Elemente Glasfasern eingegossen sein. Dabei kann die Ausrichtung der Glasfasern entsprechend den zu erwartenden Belastungen vorgesehen sein.

## Patentansprüche

1. Entkoppelnder Halter für mindestens ein zu haltendes Bauteil, insbesondere für einen Gebläsemotor (2;12),
mit einem formstabilen, ersten Bereich (4; 14), bestehend aus einem formstabilen ersten Material,
und einem elastischen, zweiten Bereich (5; 15), bestehend aus einem elastischen, dämpfend wirkenden zweiten Material, welcher einstückig in Bezug auf den formstabilen, ersten Bereich (4; 14) ausgebildet ist,
wobei ein formstabiler dritter Bereich (6; 16), bestehend aus einem formstabilen dritten Material vorgesehen ist, der einstückig in Bezug auf den elastischen, zweiten Bereich (5; 15) ausgebildet ist und durch den zweiten Bereich (5; 15) von dem ersten Bereich (4; 14) räumlich getrennt ist,
wobei der formstabile, erste Bereich (4; 14) durch einen Träger gebildet ist oder zur Anbringung an einem Träger (3) ausgebildet ist, und der formstabile, dritte Bereich (6) für die Aufnahme des zu haltenden Bauteils ausgebildet ist,
wobei der dritte Bereich (6; 16) zumindest in einem Teilbereich hohlzylindrisch ausgebildet ist
und somit eine Längsachse aufweist,
wobei der zweite Bereich (15) durch parallel verlaufend angeordnete Hohlprofile und/oder Vollprofile gebildet ist,
wobei die Profile über den Umfang des dritten Bereichs verteilt sind und sich parallel zur Längsachse des dritten Bereichs erstrecken,
**dadurch gekennzeichnet, dass**
in den Bereichen zwischen den am Umfang des dritten Bereichs angeordneten Profilen, zur vollständigen Abdichtung zwischen dem ersten Bereich (14) und dem dritten Bereich (16), eine dünne Schicht (17), die einstückig und aus demselben Material wie der zweite Bereich (15) hergestellt ist, vorgesehen ist.

2. Halter nach Anspruch 1, **dadurch gekennzeichnet, dass** der erste Bereich und der dritte Bereich aus dem gleichen Material geformt sind.

3. Halter nach Anspruch 1 oder 2, **dadurch gekennzeichnet, dass** der erste Bereich (4; 14) zumindest in einem Teilbereich (4a) hohlzylindrisch ausgebildet ist.

4. Halter nach einem der vorhergehenden Ansprüche, **dadurch gekennzeichnet, dass** der zweite Bereich (5) zumindest in einem Teilbereich hohlzylindrisch oder ringförmig ausgebildet ist, oder dass eine Mehrzahl von zweiten Bereichen (15) zwischen dem formstabilen ersten Bereich (14) und dem zweiten Bereich (16) angeordnet sind.

5. Halter nach einem der vorhergehenden Ansprüche, **dadurch gekennzeichnet, dass** der zweite Bereich (15) durch eine Mehrzahl von Hohlprofilen und/oder Vollprofilen gebildet ist.

6. Halter nach einem der vorhergehenden Ansprüche, **dadurch gekennzeichnet, dass** der zweite Bereich (15) durch äquidistant angeordnete Hohlprofile und/oder Vollprofile gebildet ist,

7. Verwendung eines Halters (1; 11) gemäß einem der Ansprüche 1 bis 6 für die Entkoppelung einer Lagerung zwischen einem Kraftfahrzeug-Gebläsemotor (2; 12) und dessen Träger (3).

## Claims

1. A vibration isolating support for at least one component to be retrained, in particular for a fan motor (2;12),
having a dimensionally stable, first region (4; 14), composed of a dimensionally stable, first material,
and an elastic, second region (5; 15), composed of an elastic, damping-acting, second material, which is a single piece relative to the dimensionally stable, first region (4; 14),
wherein a dimensionally stable, third region (6; 16) composed of a dimensionally stable, third material is provided, which is a single piece relative to the elastic, second region (5; 15) and is spatially separated from the first region (4; 14) by the second region (5; 15) ,
wherein the dimensionally stable, first region (4; 14) is formed by a carrier or is designed to be attached to a carrier (3), and the dimensionally stable, third region (6) is designed to receive the component to be retained wherein the third region (6; 16) is hollow cylindrical at least in a subregion
and therefore has a longitudinal axis,
wherein the second region (15) is formed by hollow sections and/or solid sections which extend in parallel,
wherein the sections are distributed around the circumference of the third region and extend parallel to the longitudinal axis of the third region,
**characterised in that**
a thin layer (17) which is a single piece and is made of the same material as the second region (15) is provided in the regions between the sections disposed on the circumference of the third region, to form a complete seal between the first region (14) and the third region (16).

2. The support according to claim 1, **characterized in that** the first region and the third region are formed of the same material.

3. The support according to claim 1 or 2, **characterized in that** the first region (4; 14) is hollow cylindrical at least in one subregion (4a).

4. The support according to one of the preceding claims, **characterized in that** the second region (5) is hollow cylindrical or annular at least in a subregion, or a plurality of second regions (15) is disposed between the dimensionally stable, first region (14) and the second region (16).

5. The support according to one of the preceding claims, **characterized in that** the second region (15) is formed of a plurality of hollow sections and/or solid sections.

6. The support according to one of the preceding claims, **characterized in that** the second region (15) is formed of equidistantly disposed hollow sections and/or solid sections.

7. The use of a support (1; 11) according to one of the claims 1 to 6 for isolating a bearing between a motor vehicle blower motor (2; 12) and carries (3).

## Revendications

1. Elément de fixation à découplage pour au moins un composant à fixer, en particulier pour un moteur de pulseur (2 ; 12),
comprenant une première zone indéformable (4 ; 14) se composant d'une première Matière indéformable,
et une deuxième zone élastique (5 ; 15) sue composant d'une deuxième matière élastique à effet amortisseur, laquelle deuxième zone est configurée en étant d'un seul tenant par rapport à à première zone indéformable (4 ; 14),
où il est prévu une troisième zone indéformable (6 ; 16) se composant d'une troisième matière indéformable, laquelle troisième zone est configurée en étant d'un seul tenant par rapport. à la deuxième zone élastique (5 ; 15) est est spatialement séparée de la première zone (4 ; 14), par la deuxième zone (5 ; 15),
où la première zone indéformable (4 ; 14) est formée par un support ou bien est configurée pour servir à la fixation sur un support (3), et la troisième zone indéformable (6) est configurée pour le logement du composant à fixer,
où la troisième zone (6 ; 16) est configurée en étant de forme cylindrique creuse, au moins dans une zone partielle,
et, par conséquent, présente un axe longitudinal,
où la deuxième zone (15) est formée par des profils creux est / ou des profils pleins disposés en s'étendant de façon parallèle,
où les profils sont répartis sur la circonférence de la troisième zone et s'étendent parallèlement à l'axe longitudinal de la troisième zone,
**caractérisé en ce que,** dans les zones comprises entre les profils disposés sur la circonférence de la troisième zone, il est prévu une couche mince (17) servant à assurer une étanchéité totale entre la première zone (14) et la troisième zone (16), laquelle couche mince est fabriquée en étant d'un seul tenant et dans la même matière que la deuxième zone (15).

2. Elément de fixation salon la revendication 1, **caractérisé en ce que** la première zone et la troisième zone sont formées dans la même matière.

3. Elément de fixation selon la revendication 1 ou 2, **caractérisé en ce que** la première zone (4 ; 14) est configurée en étant de forme cylindrique creuse, au moins dans une zone partielle (4a).

4. Elément de fixation, selon l'une quelconque des revendications précédentes, **caractérisé en ce que** la deuxième zone (5) est configurée en étant de forme cylindrique creuse ou de forme annulaire, au moins dans une zone partielle, ou bien **en ce que** des deuxièmes zones (15), formant une pluralité de zones, sont disposées entre la première zone indéformable (14) et la troisième zone (16).

5. Elément de fixation selon l'une quelconque des revendications précédentes, **caractérisé en ce que** la deuxième zone (15) est formée par une pluralité de profils creux et / ou de profils pleins.

6. Elément de fixation selon l'une quelconque des revendications précédentes, **caractérisé en ce que** la deuxième zone (15) est formée par des profils creux et / ou des profils pleins disposés de façon équidistante.

7. Utilisation d'un élément de fixation (1 ; 11) selon l'une quelconque des revendications 1 à 6, pour le découplage d'une suspension entre un moteur de pulseur de véhicule automobile (2 ; 12) et son support (3).
